# DEMANDE DE BREVET EUROPEEN

(11) **EP 3 372 337 A1**
(43) Date de publication de la demande: **12.09.2018**
(21) Numéro de dépôt: 18156925.2
(22) Date de dépôt: 15.02.2018
(51) Int. Cl.: B23P 21/00, B23K 9/095, B23K 37/04, B23K 37/02, B23K 26/03, B23K 101/00

(54) **PROCEDE DE FABRICATION D'UNE STRUCTURE MECANOSOUDEE A L'AIDE D'UN SYSTEME DE VISION**

(30) Priorité: 10.03.2017 FR 1751964
(71) Demandeur: PSA Automobiles SA, 78300 Poissy (FR)
(72) Inventeur: POIRRIER, THIERRY, 14970 ST AUBIN D'ARQUENAY (FR); PRUVOST, THIERRY, 91360 EPINAY SUR ORGE (FR)

(57) **Abrégé**

L'invention a pour objet un procédé de fabrication d'une structure mécanosoudée (4) par soudure automatisée, caractérisé en ce qu'il comporte dans une première phase de chargement une étape de dépose de composants, puis une étape de contrôle par un système de vision automatisé de la présence de ces composants, en ce qu'il comporte dans une deuxième phase de production une étape de mouvements automatisés de bridage des composants en position, puis une étape de contrôle par le système de vision de ces mouvements, et ensuite une étape de réalisation des soudures, et en ce qu'il comporte dans une troisième phase de déchargement une étape de mouvements automatisés de débridage de la structure (4), puis une étape de contrôle par le système de vision de ce débridage.

## Description

La présente invention concerne un procédé de fabrication d'une structure mécanosoudée, ainsi qu'un poste de travail mettant en oeuvre un tel procédé de fabrication.

Un type de poste de travail connu pour la production de structures mécanosoudées, notamment pour des berceaux de trains avant ou arrière de véhicules, comporte un outillage d'assemblage recevant par une dépose manuelle ou automatisée les différents composants de la structure, formés notamment par des tôles embouties, qui sont ajustés de manière préliminaire dans des guidages.

Après un contrôle visuel par l'opérateur, ou automatisé par différents capteurs de présence de tous les composants, l'opérateur actionne une commande qui va fermer une barrière mettant en sécurité le poste. Le poste réalise ensuite différents mouvements automatiques sur l'outillage d'assemblage pour réaliser le positionnement final des composants et leurs bridages. Les mouvements automatiques peuvent concerner des chariots ou des vérins de déplacement, et des brides de serrage.

On a ensuite à nouveau un contrôle visuel par l'opérateur ou automatisé par différents capteurs des positions finales des composants, ou des mouvements pour s'assurer qu'ils ont tous été accomplis.

On a ensuite un lancement du cycle automatique de soudage de la structure par un bras manipulateur ou un robot de soudure. Ce cycle automatique peut comporter en cours de soudage un déplacement de la structure avant de reprendre les opérations de soudage, en particulier un retournement d'un berceau de véhicule afin de terminer des soudures sur une face inférieure.

Le robot de soudure comporte généralement son propre automatisme et ses propres capteurs de sécurité.

On a ensuite, après éventuellement différents contrôles visuels ou automatisés de la réalisation des soudures, des mouvements automatiques inverses qui libèrent la structure terminée.

On a enfin après une mise en sécurité du poste de travail s'assurant de la fin de tous les mouvements, une ouverture de la barrière de protection qui peut être un système mécanique ou optique, donnant à l'opérateur l'accès au poste de travail.

Les différents capteurs peuvent utiliser tout type de technologie, comme un contact mécanique, une détection électromagnétique, ou une détection optique utilisant un faisceau ou des cellules en barrage.

Toutefois un problème se pose pour ce type de poste de travail, à cause du grand nombre de capteurs nécessaires pour vérifier la présence des composants, leurs bons positionnements, ainsi que la réalisation des différents mouvements automatiques dans un sens ou dans l'autre.

Ces capteurs comportent généralement des câbles de liaison vers des armoires de commande présentant un certain encombrement. L'intégration de l'ensemble des capteurs dans le poste de travail peut être délicate, notamment pour les positionner, les régler, et disposer des systèmes de protection de ces capteurs qui peuvent être fixes ou mobiles.

De plus la gestion d'un automatisme comportant de nombreux capteurs peut être complexe à réaliser.

Par ailleurs l'environnement d'un poste de travail réalisant des soudures générant de la chaleur et des projections de particules, est contraignant pour des éléments délicats. Le déréglage ou la défaillance de capteurs sont courants. On a alors des risques de défauts sur les structures, et d'arrêts fréquents du poste de travail pour réaliser de la maintenance comprenant des nettoyages, des réglages ou des changements de capteurs.

Pour les contrôles visuels par les opérateurs les productions en grande série ne permettent pas de garantir une absence de défaut à cause de l'attention soutenue demandée, en particulier pour les postes complexes présentant un grand nombre de points de contrôle à effectuer.

Une autre solution pour réaliser certains contrôles de présence de composants avant le cycle de soudure, consiste à réaliser sur le support un pesage de composants afin de s'assurer de leurs présences. Toutefois cette solution est difficile à réaliser pour des pièces légères, notamment des tôles en aluminium présentant une faible masse.

Par ailleurs un type de système robotisé de soudure à commande visuelle connu, présenté notamment par le document WO-A1-9000108, comporte une caméra effectuant une lecture des cordons de soudures effectués, qui sont comparés à des cordons de référence réalisés dans une étape d'apprentissage. On peut ainsi effectuer automatiquement des corrections des paramètres de soudure pour obtenir la qualité.

Toutefois ce type de système robotisé ne réalise pas d'opération de contrôle par vision de présence de composants, de leurs positionnements, ou de différents mouvements qui peuvent se produire. Des capteurs sont nécessaires pour ces opérations, entraînant les différents problèmes cités ci-dessus.

La présente invention a notamment pour but d'éviter ces problèmes de l'art antérieur.

Elle propose à cet effet un procédé de fabrication d'une structure mécanosoudée par soudure automatisée de composants disposés sur un outillage d'assemblage, remarquable en ce qu'il comporte dans une première phase de chargement une étape de dépose des composants sur l'outillage d'assemblage, puis une étape de contrôle par un système de vision automatisé de la présence de ces composants, en ce qu'il comporte dans une deuxième phase de production une étape de mouvements automatisés de bridage des composants en position, puis une étape de contrôle par le système de vision de ces mouvements, et ensuite une étape de réalisation des soudures, et en ce qu'il comporte dans une troisième phase de déchargement une étape de mouvements automatisés de débridage de la structure, puis une étape de contrôle par le système de vision de ce débridage.

Un avantage de ce procédé de fabrication est qu'il permet sans capteurs ou avec peu de capteurs fixés sur l'outillage, avec un système simple comportant une ou plusieurs caméras de vision éloignées de la structure ce qui assure leurs protections, d'effectuer à l'aide de logiciels d'analyse des images des opérations nombreuses et complexes de contrôle de présence des composants, de leurs positionnements, et des mouvements des éléments mobiles installés sur l'outillage.

On peut obtenir une fiabilité élevée du poste de travail assurant la qualité, ainsi qu'une réduction des opérations de maintenance, ce qui améliore le taux de disponibilité de ce poste et réduit les coûts de production.

Le procédé de fabrication selon l'invention peut de plus comporter une ou plusieurs des caractéristiques suivantes, qui peuvent être combinées entre elles.

Avantageusement, le procédé comporte à la fin de la première phase de chargement une étape de verrouillage d'une barrière de sécurité, et après l'étape de contrôle par le système de vision du débridage de la structure, une étape de déverrouillage de cette barrière de sécurité.

Dans ce cas, avantageusement le procédé comporte après l'étape de verrouillage de la barrière de sécurité, une étape de lancement par un opérateur de la phase de production.

En particulier, l'étape de réalisation des soudures peut comporter une étape de retournement de la structure.

L'étape de contrôle par le système de vision des mouvements de bridage des composants et l'étape de contrôle de débridage de la structure, peuvent comporter un suivi de la position de vérins de bridage.

L'invention a aussi pour objet un poste de travail réalisant une soudure automatisée de structures mécanosoudées, comportant des moyens mettant en oeuvre un procédé de fabrication comprenant l'une quelconque des caractéristiques précédentes.

Avantageusement, le poste de travail comporte un système d'éclairage projetant une lumière sur l'outillage d'assemblage.

Avantageusement, le poste de travail comporte une cible fixe disposée dans le champ de vision du système de vision.

En particulier, l'outillage d'assemblage peut comporter des moyens de positionnement d'un berceau de véhicule automobile formant la structure mécanosoudée.

Dans ce cas, le poste de travail peut comporter des moyens de soudure de composants en alliage d'aluminium faisant partie du berceau.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue de côté d'un poste de travail selon l'invention, réalisant la soudure d'un berceau avant d'un véhicule automobile ;
- la figure 2 est une vue de face de ce poste de travail ; et
- la figure 3 est une vue de dessus du berceau de train avant.

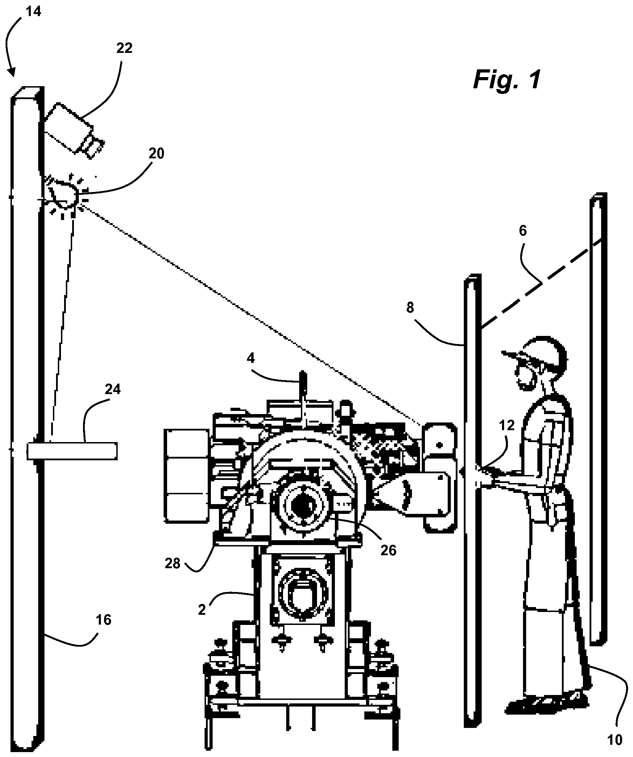

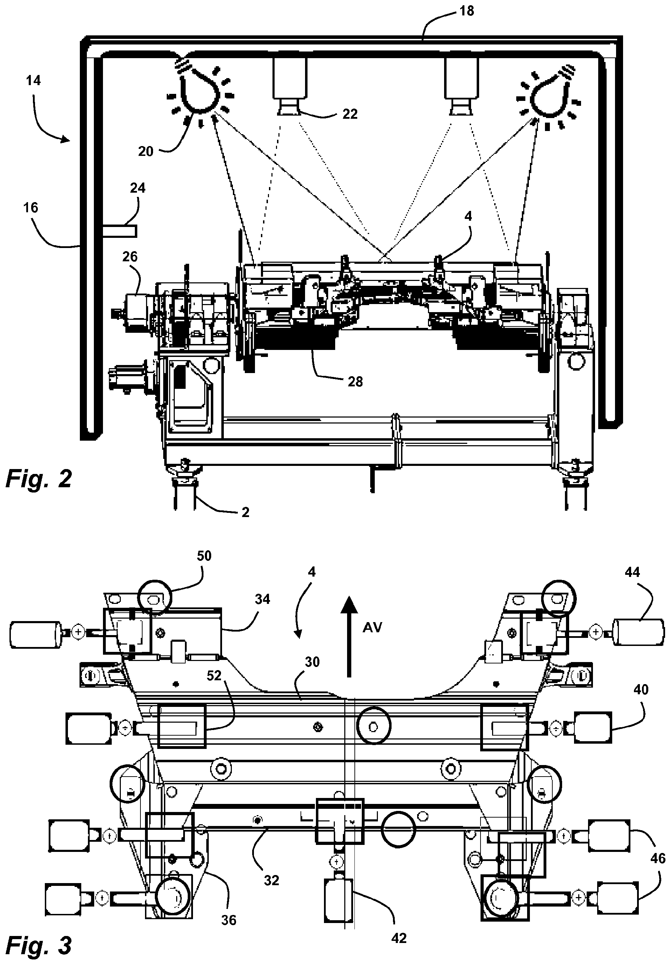

Les figures 1 et 2 présentent un poste de travail comportant un support 2 posé au sol, comprenant sur le dessus un outillage d'assemblage 28 formant un plateau équipé de différents moyens de positionnement des composants d'un berceau avant 4 d'un véhicule automobile.

Le poste de travail comporte du côté avant une barrière de sécurité 6 disposée entre deux mâts 8, qui impose le retrait d'un opérateur 10 en arrière pendant toutes les opérations à l'intérieur du poste qui pourraient être dangereuses pour cet opérateur.

Un des mâts 8 comporte une commande 12 permettant à l'opérateur restant derrière la barrière de sécurité 6 de commander des opérations.

Un portique 14 disposé en arrière du poste comporte deux poteaux 16 implantés de chaque côté de ce poste, supportant une traverse 18 recevant deux éclairages 20 projetant une lumière sur l'ensemble de l'outillage d'assemblage 28 et de ses équipements, et deux caméras 22 filmant ces éléments reliées à un ordinateur de contrôle.

Un des poteaux 16 comporte une cible optique 24 rigidement fixée, tournée vers le dessus et recevant la lumière des éclairages, disposée dans le champ de vision des caméras 22 afin de constituer un repère fixe permettant d'initialiser le positionnement des images filmées.

L'outillage d'assemblage 28 comporte un axe de rotation horizontale équipé d'une motorisation 26, permettant une rotation de l'ensemble du berceau avant 4 suivant cet axe afin de réaliser par le dessus des soudures sur chaque face.

La figure 3 présente un berceau avant 4 présentant un côté avant indiqué par la flèche AV, formé par un ensemble de composants déposés sur l'outillage d'assemblage 28, comprenant une plaque centrale 30, une plaque arrière 32 accolée à cette plaque centrale, et de chaque côté un bras avant 34 et un bras arrière 36. En particulier le berceau avant peut comporter des composants réalisés en alliage d'aluminium pour former un berceau allégé.

La plaque centrale 30 est positionnée et maintenue de chaque côté par un premier vérin latéral 40, la plaque arrière 32 par un vérin central disposé vers l'arrière 42. Chaque bras avant 34 est positionné et maintenu par un deuxième vérin latéral 44, chaque bras arrière 36 par un troisième et un quatrième vérin latéral 46.

L'outillage d'assemblage 28 comporte des butées de positionnement recevant l'appui des composants du berceau avant 4, sous l'effet des vérins de bridage 40, 42, 44, 46 qui mettent en appui ces composants sur leurs butées afin de garantir un positionnement précis et un maintien rigide.

Le procédé de fabrication d'un berceau 4 selon l'invention est le suivant.

Dans une première phase de chargement, l'opérateur 10 dans une première étape charge à la main l'ensemble des composants du berceau 4 dans l'outillage 28 en les disposant dans des emplacements, puis ressort du poste en venant en arrière de la barrière de sécurité 6. Dans une étape suivante l'opérateur 10 valide ensuite son chargement par une action sur la commande 12.

Dans une étape suivante un système de vision reçoit les images des caméras 22 filmant les pièces éclairées par les éclairages 20, pour déterminer notamment avec les différences de couleur ou de contraste, la présence de l'ensemble des composants ainsi que leurs positionnements corrects.

En particulier le système de vision peut contrôler la présence de chaque composant 30, 32, 34, 36 en des points indiqués par des cercles 50, comprenant un ou deux points par composant.

Si les zones de chargement entrent dans les critères d'acceptation définis, le poste de travail autorise la fermeture de la barrière de sécurité 6 pour poursuivre la suite du cycle.

Lors d'une deuxième phase de production, dans une première étape les différents vérins 40, 42, 44, 46 sont actionnés, et dans une étape suivante le système de vision vérifie l'accomplissement de leurs mouvements de bridage. En particulier le système de vision peut contrôler le mouvement de chaque vérin 40, 42, 44, 46 en des points indiqués par des rectangles 52 correspondant à l'extrémité de leurs tiges.

Dans une étape suivante le cycle de soudure est engagé, le robot de soudure réalise toutes les opérations sur le dessus du berceau 4.

Dans une étape suivante le berceau 4 est retourné grâce à la motorisation 26 de l'outillage d'assemblage 28 le basculant suivant son axe horizontal, puis le robot de soudure réalise les opérations sur le dessous de ce berceau.

Le système de vision peut en complément réaliser des opérations de contrôle des soudures effectuées.

Lors d'une troisième phase de déchargement, dans une première étape le poste de travail libère l'ensemble des vérins de bridage 40, 42, 44, 46. Dans une étape suivante le système de vision contrôle l'accomplissement des mouvements de retrait de l'ensemble de ces vérins 40, 42, 44, 46.

Le poste de travail autorise dans une étape suivante l'ouverture de la barrière de sécurité 6. L'opérateur 10 peut enlever le berceau terminé 4 en toute sécurité, étant assuré que le débridage complet de ce berceau est effectué.

Le système de vision unique comprenant des caméras 22 déportées au-dessus du poste de travail, et donc protégées de la chaleur et des émissions de particules venant des soudures, permet de contrôler à la fois la présence des composants, leurs bon positionnements, et l'ensemble des mouvements des vérins 40, 42, 44, 46 pour les opérations de bridage et de débridage.

La cible optique 24 permet de situer les images des caméras 22 par rapport à un repère fixe, pour améliorer la précision de mesure des positions filmées.

Le système de vision convient en particulier pour détecter la présence de pièces légères, notamment en alliage d'aluminium, qui délivrent un appui faible sur l'outillage d'assemblage 28 et sont difficilement détectables par un procédé de pesage.

Ce système simple et efficace comporte très peu de risques de défaillance. Des analyses sur un poste de travail présenté ci-dessus, ont montré la possibilité de gagner environ 1 % en productivité de ce poste avec la réduction des arrêts pour la maintenance en cas de détérioration des capteurs. Les coûts de production sont réduits, la qualité est améliorée par la garantie de la conformité de la structure obtenue.

En complément l'outillage d'assemblage 28 peut conserver certains capteurs s'ajoutant à la détection par le système de vision, si ce système peut difficilement réaliser certaines opérations de contrôle.

## Revendications

1. Procédé de fabrication d'une structure mécanosoudée (4) par soudure automatisée de composants (30, 32, 34, 36) disposés sur un outillage d'assemblage (28), **caractérisé en ce qu'**il comporte dans une première phase de chargement une étape de dépose des composants (30, 32, 34, 36) sur l'outillage d'assemblage (28), puis une étape de contrôle par un système de vision automatisé de la présence de ces composants (30, 32, 34, 36), **en ce qu'**il comporte dans une deuxième phase de production une étape de mouvements automatisés de bridage des composants (30, 32, 34, 36) en position, puis une étape de contrôle par le système de vision de ces mouvements, et ensuite une étape de réalisation des soudures, et **en ce qu'**il comporte dans une troisième phase de déchargement une étape de mouvements automatisés de débridage de la structure (4), puis une étape de contrôle par le système de vision de ce débridage.

2. Procédé de fabrication selon la revendication 1, **caractérisé en ce qu'**il comporte à la fin de la première phase de chargement une étape de verrouillage d'une barrière de sécurité (6), et après l'étape de contrôle par le système de vision du débridage de la structure (4), une étape de déverrouillage de cette barrière de sécurité (6).

3. Procédé de fabrication selon la revendication 2, **caractérisé en ce qu'**il comporte après l'étape de verrouillage de la barrière de sécurité (6), une étape de lancement par un opérateur (10) de la phase de production.

4. Procédé de fabrication selon l'une quelconque des revendications précédentes, **caractérisé en ce que** l'étape de réalisation des soudures comporte une étape de retournement de la structure (4).

5. Procédé de fabrication selon l'une quelconque des revendications précédentes, **caractérisé en ce que** l'étape de contrôle par le système de vision des mouvements de bridage des composants (30, 32, 34, 36) et l'étape de contrôle de débridage de la structure (4), comportent un suivi de la position de vérins de bridage (40, 42, 44, 46).

6. Poste de travail réalisant une soudure automatisée de structures mécanosoudées (4), **caractérisé en ce qu'**il comporte des moyens mettant en oeuvre un procédé de fabrication selon l'une quelconque des revendications précédentes.

7. Poste de travail selon la revendication 6, **caractérisé en ce qu'**il comporte un système d'éclairage (20) projetant une lumière sur l'outillage d'assemblage (28).

8. Poste de travail selon la revendication 6 ou 7, **caractérisé en ce qu'**il comporte une cible fixe (24) disposée dans le champ de vision du système de vision.

9. Poste de travail selon l'une quelconque des revendications 6 à 8, **caractérisé en ce que** l'outillage d'assemblage (28) comporte des moyens de positionnement d'un berceau de véhicule automobile formant la structure mécanosoudée (4).

10. Poste de travail selon la revendication 9, **caractérisé en ce qu'**il comporte des moyens de soudure de composants en alliage d'aluminium faisant partie du berceau.
